# EUROPEAN PATENT APPLICATION

(11) **EP 3 792 598 A1**
(43) Date of publication of application: **17.03.2021**
(21) Application number: 19910023.1
(22) Date of filing: 11.11.2019
(51) Int. Cl.: G01C 21/34

(54) **INFORMATION ACQUISITION METHOD AND DEVICE**

(30) Priority: 16.01.2019 CN 201910041451
(71) Applicant: BEIJING BAIDU NETCOM SCIENCE TECHNOLOGY CO., LTD., No.10 Shangdi 10th Street Haidian District Beijing 100085 (CN)
(72) Inventor: WU, Zelin, Beijing 100085 (CN); WANG, Yue, Beijing 100085 (CN); LIU, Yingnan, Beijing 100085 (CN); RAO, Wenlong, Beijing 100085 (CN); GONG, Wei, Beijing 100085 (CN)
(74) Representative: Richly & Ritschel Patentanwälte PartG mbB
(86) International application number: PCT/CN2019/116974
(87) International publication number: WO 2020/147389

(57) **Abstract**

An information acquisition method and device. The detailed description of the preferred embodiment of the method comprises: generating driving effect preview information which indicates a driving effect when a vehicle drives according to a planned driving route (201), wherein the planned driving route is determined on the basis of a driving route planning operation carried out by a user using an electronic map; and presenting the driving effect preview information to the user (202). Before the vehicle drives according to the planned driving route planned by the user, the effect of the vehicle driving according to the planned driving route is presented to the user in advance, so that the user may know the driving environment of the vehicle in advance, thereby improving the driving safety of the vehicle when the vehicle drives according to the planned driving route. At the same time, the user may know how reasonable the planned driving route is.

## Description

This patent application claims priority to Chinese Patent Application No. 201910041451.2, filed on January 16, 2019, titled "Method and apparatus for acquiring information," which is hereby incorporated by reference in its entirety.

### TECHNICAL FIELD

The present disclosure relates to the field of vehicles, in particular to the field of vehicle safety, and more particularly to a method and apparatus for acquiring information.

### BACKGROUND

In some driving tasks, a user may plan a traveling route of the vehicle, and the vehicle runs according to the planned traveling route planned by the user. However, in the case where the planned traveling route planned by the user is unreasonable, the safety, timeliness, and the like of the vehicle traveling when the vehicle travels along the planned traveling route are affected.

### SUMMARY

The present disclosure provides a method and apparatus for acquiring information.

In a first aspect, the present disclosure provides a method for acquiring information, the method including: generating traveling effect preview information indicating a traveling effect when a vehicle travels according to a planned traveling route, the planned traveling route being determined based on a traveling route planning operation performed by a user using an electronic map; and presenting the traveling effect preview information to the user.

In a second aspect, the present disclosure provides an apparatus for acquiring information, the apparatus including: a generation unit configured to generate traveling effect preview information indicating a traveling effect when the vehicle travels according to a planned traveling route, the planned traveling route being determined based on a traveling route planning operation performed by a user using an electronic map; and a presentation unit configured to present the traveling effect preview information to the user.

The method and apparatus for acquiring information provided in the present disclosure, by generating traveling effect preview information indicating a traveling effect when a vehicle travels according to a planned traveling route, the planned traveling route being determined based on a traveling route planning operation performed by a user using an electronic map; and presenting the traveling effect preview information to the user. It is realized that before the vehicle travels according to the planned traveling route planned by the user, the effect when the vehicle travels according to the planned traveling route is presented to the user in advance, so that the user can know the driving environment of the vehicle in advance, thereby improving the safety of the vehicle when the vehicle travels according to the planned traveling route, and at the same time, the user can know the rationality of the planned traveling route.

### Brief DESCRIPTION OF THE DRAWINGS

Other features, objects, and advantages of the present disclosure will become more apparent by reading the detailed description of non-limiting embodiments made with reference to the following drawings.
Fig. 1 illustrates an example system architecture suitable for implementing embodiments of the present disclosure;
Fig. 2 shows a flowchart of a method for acquiring information according to an embodiment of the present disclosure;
Fig. 3 shows a flowchart of a method for acquiring information according to another embodiment of the present disclosure;
Fig. 4 shows a schematic structural diagram of an apparatus for acquiring information according to an embodiment of the present disclosure;
Fig. 5 shows a schematic structural diagram of a computer system suitable for implementing a terminal and a server according to embodiments of the present disclosure.

### DETAILED DESCRIPTION

The present disclosure is described in further detail below with reference to accompanying drawings and embodiments. It is to be understood that specific embodiments described herein are merely illustrative of the relevant disclosure and are not restrictive of the disclosure. It is also to be noted that, for ease of description, only parts related to the disclosure are shown in the drawings.

It should be noted that the embodiments in the present disclosure and the features in the embodiments may be combined with each other without conflict. The present disclosure will now be described in detail with reference to the accompanying drawings and examples.

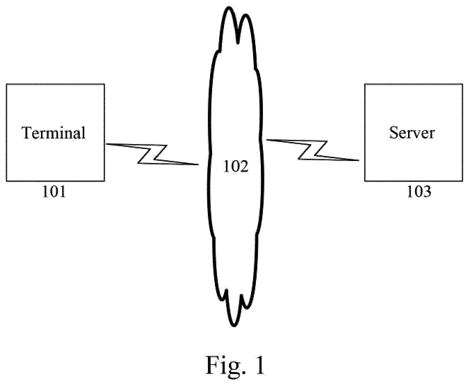

Referring to Fig. 1, an example system architecture suitable for implementing embodiments of the present disclosure is shown.

As shown in Fig. 1, a terminal 101, a network 102, and a server 103. The network 102 may be a wired communication network or a wireless communication network.

The terminal 101 may send a request to the server, receive an electronic map sent by the server 103, and present the electronic map on the terminal 101 to a user of the terminal 101. The user of the terminal 101 may set a planned traveling route of the vehicle by performing a corresponding operation using the electronic map. The vehicle may be an autonomous vehicle having the capability of autonomous driving. The electronic map may be a high-precision map.

The terminal 101 may transmit the planned traveling route of the vehicle set by the user of the terminal 101 to the server 103, and the server 103 may generate traveling effect preview information indicating a traveling effect when the vehicle travels along the planned traveling route according to the planned traveling route and the high-precision map. The server 103 may transmit the traveling effect preview information to the terminal 101, and present the traveling effect preview information on the terminal 101 to the user of the terminal 101.

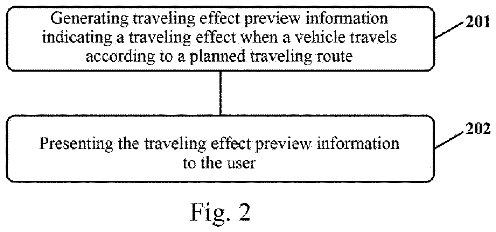

Referring to Fig. 2, there is shown a flow of a method for acquiring information according to an embodiment of the present disclosure. The method includes the following steps.

Step 201: generating traveling effect preview information indicating a traveling effect when a vehicle travels according to a planned traveling route.

In this embodiment, an electronic map may first be presented to the user on the display screen of the user's terminal. The electronic map may be a high-precision map. The high-precision map may include road objects and labeling data of the road objects such as lane lines, zebra crossing, stop lines, diversion lines, traffic signs, and the like on a road. The labeling data of the lane line, the zebra crossing, the stop line, and the diversion line each includes a parameter equation and coordinates of a corner point in a world coordinate system. The labeling data of the traffic sign includes the location of the traffic sign in the world coordinate system.

In the present embodiment, a user may perform a traveling route planning operation using an electronic map. For example, after presenting the electronic map to the user in the traveling route planning interface, the traveling route planning operation includes pressing the display screen by a touch pen or a finger of the user all the time from the start point and moving on the display, stopping moving until to the end point, and drawing the planned traveling route located in the electronic map.

In this embodiment, after the planned traveling route is determined, the traveling effect preview information indicating the traveling effect when the vehicle travels according to the planned traveling route may be generated. The vehicle may be an autonomous vehicle having the capability of autonomous driving.

For example, first determining the position to which the autonomous vehicle travels at each moment when the autonomous vehicle travels according to the planned traveling route at a predetermined speed, and operations to be performed, such as the turning, turning round, changing lanes, or the like by the vehicle during the traveling based on the high-precision map, and then generating the traveling effect preview information indicating the traveling effect of the autonomous vehicle when the autonomous vehicle travels according to the planned traveling route at the predetermined speed.

In this embodiment, the traveling effect preview information may be an animation indicating a traveling effect when the vehicle travels along a traveling route. The traveling effect preview animation indicating the traveling effect of the vehicle traveling according to the traveling route may include traveling effect preview images presented in sequential order and indicating the traveling effect of the vehicle traveling according to the traveling route. In each traveling effect preview image, the position of the vehicle corresponds to a real position to which the vehicle travels when traveling along the planned traveling route. Each traveling effect preview image may include a vehicle object representing a vehicle, a pattern representing a building near a position to which the vehicle travels during traveling, a pattern representing a traffic sign near a position to which the vehicle travels during traveling, and the like.

Step 202, presenting the traveling effect preview information to the user.

In this embodiment, after the traveling effect preview information indicating the traveling effect when the vehicle travels according to the planned traveling route is generated, the traveling effect preview information can be presented to the user on the presentation interface on the user's terminal. Thus, the user can know in advance the effect when the vehicle is traveling along the planned traveling route before the vehicle travels along the planned traveling route.

For example, the vehicle is an autonomous vehicle, the traveling effect preview information may be an animation indicating a traveling effect when the vehicle travels according to a traveling route, and the traveling effect preview animation indicating a traveling effect when the vehicle travels according to a traveling route may include a traveling effect preview images presented in sequential order and indicating the traveling effect of the vehicle traveling according to the traveling route. In each traveling effect preview image, the position of the vehicle corresponds to a real position to which the vehicle travels when traveling along the planned traveling route. Each traveling effect preview image may include a vehicle object representing a vehicle, a pattern representing a building near a position to which the vehicle travels during traveling, a pattern representing a traffic sign near a position to which the vehicle travels during traveling, and the like. When the animation of the traveling effect according to the traveling route effect is played to the user, the preview images of the traveling effect is sequentially presented to the user according to the presentation time, and the traveling effect of the autonomous vehicle according to the traveling route may be presented to the user. Therefore, the user may know in advance, in the case of that the autonomous vehicle is not traveling, the surroundings of the autonomous vehicle during traveling according to the traveling route when the autonomous vehicle travels to each position.

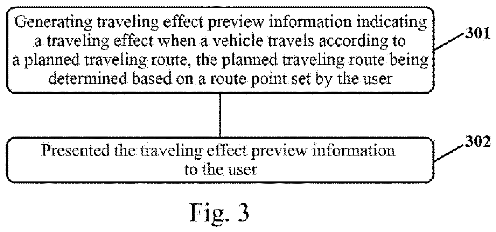

Referring to Fig. 3, there is shown a flow of a method for acquiring information according to another embodiment of the present disclosure. The method includes the following steps.

Step 301, generating traveling effect preview information indicating a traveling effect when a vehicle travels according to a planned traveling route, the planned traveling route being determined based on a route point set by the user.

In the present embodiment, a traveling route planning operation performed by a user using an electronic map includes setting a route point in the planned traveling route. A user may set a plurality of route points, and a plurality of route points of the user constitute a planned traveling route of the vehicle. The planned traveling route of the vehicle includes a plurality of route points located in the electronic map set by the user.

For example, the electronic map is a high-precision map, and after the high-precision map is presented to the user on the display screen of the terminal, the user may perform a click operation on the display screen to select a route point located in the high-precision map, and a line segment formed by connecting all the route points may represent a planned traveling route of the vehicle, thereby determining the planned traveling route of the vehicle.

In the present embodiment, when the vehicle has a plurality of traveling routes from one route point to another route point during traveling, the plurality of traveling routes may be presented to the user, then the user selects a traveling route from the one route point to the another route point among the plurality of traveling routes.

In this embodiment, the traveling effect preview information of the vehicle includes environment object information of the environment object, navigation information indicating an operation performed when the vehicle travels according to the planned traveling route, and reminder information corresponding to a preset condition that occurs when the vehicle travels according to the planned traveling route. The environment object information may represent a pattern of an environment object that occur when the vehicle travels according to a planned traveling route. An environment object that occurs when a vehicle travels according to a planned traveling route may include an object such as a building, a traffic sign, or the like in the vicinity of a position to which the vehicle travels during traveling. The environment object information of the environment object may be a pattern indicating an environment object such as a building or a traffic sign that occurs when the vehicle travels according to a planned traveling route. The navigation information of the operation performed when the vehicle travels according to the planned traveling route may be a pattern indicating the operation performed when the vehicle travels according to the planned traveling route. The reminder information corresponding to the preset condition when the vehicle travels according to the planned traveling route may be a pattern for reminding the user that the preset condition, for example, a condition needing to be decelerated, occurs when the vehicle runs according to the planned traveling route.

In this embodiment, a traveling effect preview animation may be generated that instructs the vehicle to travel along a traveling route. The traveling effect preview animation may include environment object information, navigation information indicating an operation performed when the vehicle travels according to the planned traveling route, and reminder information corresponding to a preset condition that occurs when the vehicle travels according to the planned traveling route.

For example, the traveling effect preview information of the vehicle includes an environment object that occurs when the vehicle travels according to a planned traveling route, navigation information indicating an operation performed when the vehicle travels according to the planned traveling route, and reminder information corresponding to a preset condition that occurs when the vehicle travels according to the planned traveling route. A traveling effect preview animation indicating a traveling effect of a vehicle traveling according to a traveling route may be generated. In each traveling effect preview image of the traveling effect preview animation, a position of the vehicle corresponds to a real position to which the vehicle travels when traveling according to a planned traveling route. Each traveling effect preview image may include a vehicle object representing a vehicle, a building object, and a traffic sign object in the vicinity of a position to which the vehicle travels during traveling. A pattern instructing the vehicle to perform the turning operation may be superimposed on a plurality of traveling effect preview images indicating a process of performing the turning operation when the vehicle is traveling according to the planned traveling route. A pattern indicating that the vehicle performs the turning round operation may be superimposed on a plurality of traveling effect preview images indicating a process of performing the turning round operation when the vehicle travels according to the planned traveling route. A pattern instructing the vehicle to perform the lane change operation may be superimposed on a plurality of traveling effect preview images indicating a process of performing the lane change operation when the vehicle is traveling according to the planned traveling route. The reminder information corresponding to a preset condition may be superimposed on a plurality of traveling effect preview images indicating the process of the vehicle traveling through an area associated with the preset condition according to the planned traveling route.

Step 302, presented the traveling effect preview information to the user.

In this embodiment, after the traveling effect preview information indicating the traveling effect when the vehicle travels according to the planned traveling route is generated, the traveling effect preview information may be presented to the user on the presentation interface. Thus, the user can know in advance, in the case that the vehicle is not traveling, the effect when the vehicle travels according to the planned traveling route.

For example, the traveling effect preview information is a traveling effect preview animation that instructs the vehicle to travel according to a traveling route. The traveling effect preview animation may include environment object information, navigation information indicating an operation performed when the vehicle travels according to the planned traveling route, and reminder information corresponding to a preset condition that occurs when the vehicle travels according to the planned traveling route. The traveling effect preview animation includes environment object information, navigation information indicating an operation performed when the vehicle travels according to the planned traveling route, and reminder information corresponding to a preset condition that occurs when the vehicle travels according to the planned traveling route. When playing the traveling effect preview animation of the traveling effect of the autonomous vehicle traveling according to the traveling route to the user, the traveling effect preview images are sequentially presented to the user according to the presentation time, and the effect of the autonomous vehicle traveling according to the traveling route may be presented to the user. Therefore, the user can know in advance, in the case that the vehicle is not traveling, the environment object in the surroundings of the vehicle when the vehicle travels to each position, the operation to be performed by the vehicle, and the preset traveling condition of the vehicle occurring during the traveling process.

In this embodiment, the length of the planned traveling route and the traveling duration of the vehicle may be determined. The traveling duration of the vehicle is the duration required to travel from the start point of the planned traveling route to the end point of the planned traveling route when the vehicle travels according to the planned traveling route. The determined length of the planned traveling route and he traveling duration are presented to a user. For each planned traveling route, the traveling duration of the vehicle at the same predetermined speed may be determined. The user may compare the lengths of the plurality of planned traveling routes and the traveling durations to determine the rationality of each planned traveling route.

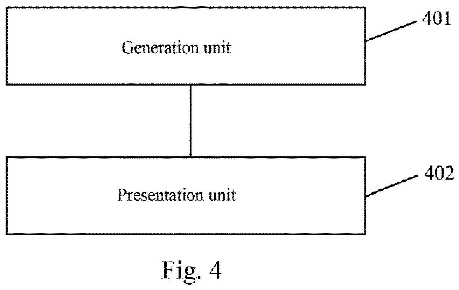

Referring to Fig. 4, as an implementation of the method shown in each of the above figures, an embodiment of the present disclosure provides an apparatus for acquiring information, the apparatus embodiment corresponds to the method embodiment shown in Fig. 2.

As shown in Fig. 4, the apparatus for acquiring information of the present embodiment includes a generation unit 401 and a presentation unit 402. The generation unit 401 is configured to generate traveling effect preview information indicating a traveling effect when the vehicle travels according to a planned traveling route, the planned traveling route being determined based on a traveling route planning operation performed by a user using an electronic map. The presentation unit 402 is configured to present the traveling effect preview information to the user.

In some alternative implementations of the present embodiment, the traveling route planning operation includes setting a route point located in the electronic map, the planned traveling route being determined based on the route point located in the electronic map set by the user.

In some alternative implementations of the present embodiment, the apparatus for acquiring information further includes a route selection unit configured to present a plurality of traveling routes to the user in response to determining there being a plurality of traveling routes between the route points set by the user; receive a traveling route selection instruction input by the user; and use a traveling route corresponding to the traveling route selection instruction among the plurality of traveling routes as a traveling route between the route points.

In some alternative implementations of the present embodiment, the traveling effect preview information includes environment object information of an environment object that occurs when the vehicle travels according to the planned traveling route, navigation information indicating an operation performed when the vehicle travels according to the planned traveling route, and reminder information corresponding to a preset travel condition that occurs when the vehicle travels according to the planned traveling route.

In some alternative implementations of the present embodiment, the apparatus for acquiring information further includes a determination unit configured to determine a length of the planned traveling route and a traveling duration of the vehicle, the traveling duration of the vehicle being a duration required to travel from a start point of the planned traveling route to an end point of the planned traveling route when the vehicle travels according to the planned traveling route; and present the determined length of the planned traveling route and the traveling duration of the vehicle to the user.

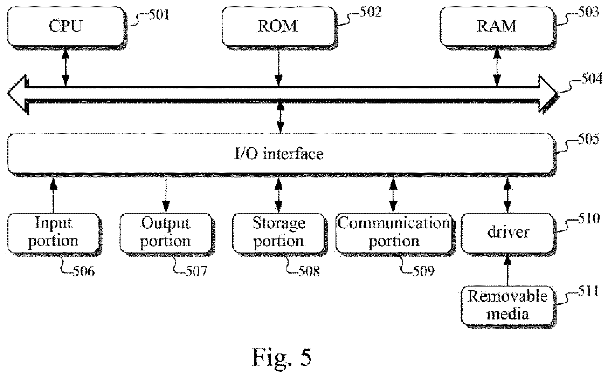

Fig. 5 shows a schematic structural diagram of a computer system suitable for implementing a terminal and a server according to embodiments of the present disclosure.

As shown in Fig. 5, the computer system includes a central processing unit (CPU) 501, which may perform various appropriate actions and processes according to a program stored in a read-only memory (ROM) 502 or a program loaded into a random access memory (RAM) 503 from a storage portion 508. In the RAM 503, various programs and data required for the operation of the computer system are also stored. The CPU 501, ROM 502, and RAM503 are connected to each other via a bus 504. An input/output (I/O) interface 505 is also connected to bus 504.

The following components may be connected to the I/O interface 505: an input portion 506; an output portion 507; a storage portion 508 including a hard disk or the like; and a communication portion 509 including a network interface card such as a LAN card, a modem, or the like. The communication portion 509 performs communication processing via a network such as the Internet. The driver 510 is also connected to the I/O interface 505 as needed. Removable media 511, such as magnetic disks, optical disks, magneto-optical disks, semiconductor memories, etc., are installed on the drive 510 as needed, so that the computer programs read therefrom are installed into the storage portion 508 as needed.

In particular, according to the embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication portion 509, and/or installed from the removable media 511. The computer program, when executed by the CPU 501, implements the above mentioned functionalities as defined by the method of the embodiments of the present disclosure.

An embodiment of the present disclosure further provides an electronic device including: one or more processors; and a memory storing one or more programs. The one or more programs may contain instructions for perform the operations as described in the above embodiments. The one or more programs, when executed by the one or more processors, cause the one or more processors to perform the instructions of the operations as described in the above embodiments.

An embodiment of the present disclosure further provides a computer readable medium. The computer readable medium may be included in the electronic device; or may exist alone and is not assembled into the electronic device. The computer readable medium stores one or more computer programs thereon, the one or more programs, when executed by the electronic device, cause the electronic device to perform the operations as described in the above embodiments.

It should be noted that the computer readable medium described by the embodiments of the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the embodiments of the present disclosure, the computer readable storage medium may be any physical medium containing or storing programs which may be used by a command execution system, apparatus or element or incorporated thereto. While in the embodiments of the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable signal medium is capable of transmitting, propagating or transferring programs for use by, or used in combination with, a command execution system, apparatus or element. The program codes contained on the computer readable medium may be transmitted with any suitable medium including but not limited to: wired, optical cable, RF medium etc., or any suitable combination of the above.

The flow charts and block diagrams in the accompanying drawings illustrate architectures, functionalities and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The above description only provides an explanation of the preferable embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A method for acquiring information, the method comprising:
generating traveling effect preview information indicating a traveling effect when a vehicle travels according to a planned traveling route, the planned traveling route being determined based on a traveling route planning operation performed by a user using an electronic map; and
presenting the traveling effect preview information to the user.

2. The method of claim 1, wherein the traveling route planning operation comprises setting a route point located in the electronic map, the planned traveling route being determined based on the route point located in the electronic map and set by the user.

3. The method of claim 2, further comprising:
presenting a plurality of traveling routes to the user in response to determining there being a plurality of traveling routes between the route points set by the user;
receiving a traveling route selection instruction input by the user; and
using a traveling route corresponding to the traveling route selection instruction among the plurality of traveling routes as a traveling route between the route points.

4. The method of claim 3, wherein the traveling effect preview information comprises: environment object information of an environment object that occurs when the vehicle travels according to the planned traveling route, navigation information indicating an operation performed when the vehicle travels according to the planned traveling route, and reminder information corresponding to a preset travel condition that occurs when the vehicle travels according to the planned traveling route.

5. The method of claim 4, further comprising:
determining a length of the planned traveling route and a traveling duration of the vehicle, wherein the traveling duration of the vehicle is a duration required to travel from a start point of the planned traveling route to an end point of the planned traveling route when the vehicle travels according to the planned traveling route; and
presenting the determined length of the planned traveling route and the traveling duration of the vehicle to the user.

6. An apparatus for acquiring information, the apparatus comprising:
a generation unit configured to generate traveling effect preview information indicating a traveling effect when the vehicle travels according to a planned traveling route, the planned traveling route being determined based on a traveling route planning operation performed by a user using an electronic map; and
a presentation unit configured to present the traveling effect preview information to the user.

7. The apparatus of claim 6, wherein the traveling route planning operation comprises setting a route point located in the electronic map, the planned traveling route being determined based on the route point located in the electronic map and set by the user.

8. The apparatus of claim 7, further comprising:
a route selection unit configured to present a plurality of traveling routes to the user in response to determining there being a plurality of traveling routes between the route points set by the user; receive a traveling route selection instruction input by the user; and use a traveling route corresponding to the traveling route selection instruction among the plurality of traveling routes as a traveling route between the route points.

9. The apparatus of claim 8, wherein the traveling effect preview information comprises: environment object information of an environment object that occurs when the vehicle travels according to the planned traveling route, navigation information indicating an operation performed when the vehicle travels according to the planned traveling route, and reminder information corresponding to a preset travel condition that occurs when the vehicle travels according to the planned traveling route.

10. The apparatus of claim 9, further comprising:
a determination unit configured to determine a length of the planned traveling route and a traveling duration of the vehicle, wherein the traveling duration of the vehicle is a duration required to travel from a start point of the planned traveling route to an end point of the planned traveling route when the vehicle travels according to the planned traveling route; and present the determined length of the planned traveling route and the traveling duration of the vehicle to the user.

11. An electronic device comprising:
one or more processors; and
a memory storing one or more programs,
wherein the one or more programs, when executed by the one or more processors, cause the one or more processors to implement the method of any one of claims 1 to 5.

12. A computer readable storage medium storing computer programs thereon, wherein the programs, when executed by a processor, implements the method of any one of claims 1 to 5.
